# EUROPÄISCHE PATENTSCHRIFT

(11) **EP 0 485 404 B1**
(45) Veröffentlichungstag und Bekanntmachung des Hinweises auf die Patenterteilung: **14.09.1994**
(21) Anmeldenummer: 90910647.8
(22) Anmeldetag: 29.06.1990
(51) Int. Cl.: G11B 7/09, G11B 7/007

(54) **OPTISCHE ABTASTVORRICHTUNG**
OPTICAL SCANNING DEVICE
DISPOSITIF DE LECTURE OPTIQUE

(30) Priorität: 14.07.1989 DE 3923330
(43) Veröffentlichungstag der Anmeldung: 20.05.1992
(73) Patentinhaber: Deutsche Thomson-Brandt GmbH, 78003 Villingen-Schwenningen (DE)
(72) Erfinder: MORIMOTO, Yasuaki, Ichikawa-Shi Chiba-Ken (JP); ZUCKER, Friedhelm, D-7733 Mönchweiler (DE); BÜCHLER, Christian, D-7730 VIllingen-Schwenningen (DE)
(86) Internationale Anmeldenummer: EP9001039
(87) Internationale Veröffentlichungsnummer: WO9101551

(56) Entgegenhaltungen:
- DE-A- 3 410 589
- GB-A- 2 022 875
- PATENT ABSTRACTS OF JAPAN, Band 9, Nr. 156 (P-368)(1879), 29. Juni 1985 & JP-A-60029948
- PATENT ABSTRACTS OF JAPAN, Band 12, Nr. 429 (P-785), 14. November 1988 & JP-A-63160022
- PATENT ABSTRACTS OF JAPAN, Band 6, Nr. 51 (P-108)(929), 6. April 1982 & JP-A-56163534

## Beschreibung

Die Erfindung betrifft ein optisches Abtastsystem bestehend aus einem Aufzeichnungsträger und einer optischen Abtastvorrichtung, die nach dem Dreistrahlverfahren den Aufzeichnungsträger abtastet, dessen Datenspuren in radialer Richtung um ihre Mittellage mit einer Mittenfrequenz gewobbelt sind.

Aus der EP-A 0 256 984 ist ein plattenförmiger Aufzeichnungsträger bekannt, dessen Datenspuren um eine Mittenfrequenz gewobbelt sind. Die Datenspuren haben daher einen sinusförmigen Verlauf. Der Vorteil dieser besonderen Form der Datenspuren besteht darin, daß sie zusätzliche Informationen, z.B. Positionsinformationen, tragen können. Ein Nachteil ist aber darin zu sehen, daß die Spurführung infolge der gewobbelten Datenspur erschwert wird. An den Spurregelkreis werden daher hohe Anforderungen gestellt.

Aus der DE-A 34 10 589 ist es bekannt, einen optischen Aufzeichnungsträger mit drei Lichtstrahlen abzutasten. Der mittlere Strahl ist genau auf die Spurmitte gerichtet, während der vordere und der hintere Strahl um den gleichen Betrag, aber in unterschiedlicher Richtung von der Spurmitte versetzt sind. Der mittlere Strahl wird von einem ersten Laser erzeugt, der vordere und der hintere Strahl werden dagegen von einem zweiten Laser mit einer anderen Wellenlänge erzeugt. Alle drei Strahlen werden von einem Prismenstrahlteiler vereinigt auf die Platte fokussiert. Mit dem mittleren Strahl werden die Daten vom optischen Aufzeichnungsträger gelesen, während der vordere und hintere Strahl der Spurführung dienen.

In Electronic Components & Applications, Vol. 6, No. 4, 1984 ist auf Seite 209 bis 215 in dem Aufsatz "An integrated approach to CD-players" von J. Nijof eine nach dem Dreistrahlverfahren arbeitende optische Abtastvorrichtung beschrieben.

Der von einem Laser erzeugte Lichtstrahl wird mittels eines optischen Beugungsgitters in den Hauptstrahl, den Beugungsstrahl +1. Ordnung und den Beugungsstrahl -1. Ordnung aufgeteilt. Mittels einer Objektivlinse werden die drei Strahlen auf einen optischen Aufzeichnungsträger - beispielsweise eine Kompaktplatte - fokussiert, der den Hauptstrahl zu einem Vierquadrantenphotodetektor und jeden Beugungsstrahl erster Ordnung auf je einen Photodetektor reflektiert. Der Hauptstrahl liest die Daten vom Aufzeichnungsträger, während die Beugungsstrahlen erster Ordnung der Spurführung dienen.

Es ist nun Aufgabe der Erfindung, bei einem optischen Abtastsystem gemäß Oberbegriff des Hauptanspruchs trotz gewobbelter Datenspuren auf dem Aufzeichnungsträger eine genaue Spurführung mittels eines einfachen Spurregelkreises zu erzielen.

Die Erfindung löst diese Aufgabe dadurch, daß der Abstand zwischen dem Beugungsstrahl +1. und dem Beugungsstrahl -1. Ordnung, welche das Spurfehlersignal erzeugen, auf dem Aufzeichnungsträger ein ganzzahliges ungerades Vielfaches der halben zur Mittenfrequenz gehörenden Wellenlänge beträgt.

Es zeigen
- Figur 1: eine Platte mit gewobbelter Datenspur
- Figur 2: die Lage der Lichtstrahlen auf der gewobbelten Datenspur.

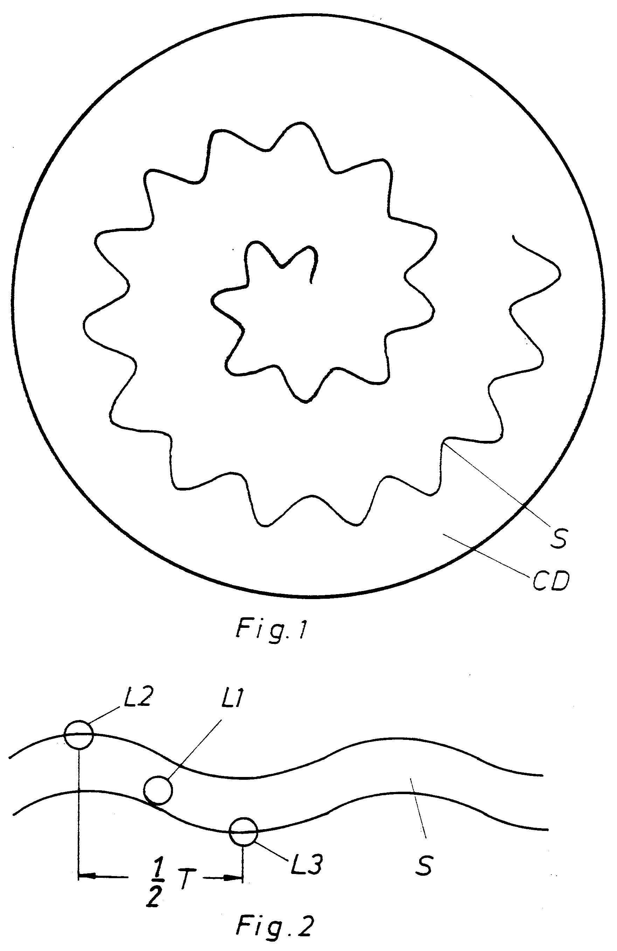

In der Figur 2 ist eine gewobbelte Datenspur S auf einem Aufzeichnungsträger CD gezeigt. Mit dem Hauptlichtstrahl L1 werden die Daten abgetastet. Der Abstand zwischen den Beugungsstrahlen +1. und -1. Ordnung, die das Spurfehlersignal erzeugen, beträgt ein ganzzahliges ungerades Vielfaches von T/2, wobei es sich bei T um die zur Mittenfrequenz gehörende Wellenlänge handelt. Die beiden Beugungsstrahlen sind mit L2 und L3 bezeichnet. Die Breite der Datenspur beträgt etwa 1µ, während die Amplitude der sinusförmigen Datenspur nur etwa 30nm beträgt.

Dadurch, daß der Abstand der beiden Beugungsstrahlen L2 und L3 ein ganzzahliges ungradzahliges Vielfaches der halben Wellenlänge T der Sinuskurve beträgt, ändert sich die Lichtintensität des reflektierten Beugungsstrahles +1. Ordnung L2 synchron mit der des Beugungsstrahles -1. Ordnung L3. Deshalb wird das Spurfehlersignal, das aus den elektrischen Signalen erzeugt wird, die von den vom Aufzeichnungsträger reflektierten Beugungsstrahlen L2 und L3 erzeugt werden, nicht mehr von der sinusförmigen Datenspur moduliert. Weil daher im Spurregelkreis keine durch das Wobbeln der Datenspur verursachte Störgröße mehr auftritt, kann der Spurregelkreis ebenso einfach wie für einen Aufzeichnungsträger ohne gewobbelte Spur aufgebaut sein. Es werden keine höhere Anforderungen an den Spurregelkreis gestellt.

## Patentansprüche

1. Optisches Abtastsystem bestehend aus einem Aufzeichnungsträger (CD) und einer optischen Abtastvorrichtung, die nach dem Dreistrahlverfahren den Aufzeichnungsträger (CD) abtastet, dessen Datenspuren (S) in radialer Richtung um ihre Mittellage mit einer Mittenfrequenz gewobbelt sind, **dadurch** **gekennzeichnet**, daß der Abstand zwischen dem Beugungsstrahl +1. und dem Beugungsstrahl -1. Ordnung (L2, L3), welche das Spurfehlersignal erzeugen, auf dem Aufzeichnungsträger (CD) ein ganzzahliges ungerades Vielfaches der halben zur Mittenfrequenz gehörenden Wellenlänge beträgt.

## Claims

1. Optical scanning system consisting of a recording medium (CD) and an optical scanning device scanning the recording medium (CD) according to the triple-beam principle, the data tracks (S) of said medium being wobbled in radial direction about their center position with a mean frequency, **characterized** **in** **that** the distance between the +1 level diffraction beam and the -1 level diffraction beam (L2, L3), which generate the tracking error signal, on the recording medium (CD) is an odd integral multiple of one half the wavelength corresponding to the mean frequency.

## Revendications

1. Système d'exploration optique constitué par un support d'enregistrement (CD) et un dispositif d'exploration optique qui explore le support d'enregistrement (CD), dont les pistes de données (S) sont wobulées avec une fréquence centrale dans le sens radial autour de leur position centrale, selon le procédé à trois faisceaux, **caractérisé** **en** **ce** que l'écart entre le faisceau de diffraction d'ordre +1 et le faisceau de diffraction d'ordre -1 (L2, L3), qui produisent le signal d'erreur de piste, sur le support d'enregistrement (CD) est un multiple entier impair de la demie longueur d'onde qui fait partie de la fréquence centrale.
